(19) Europäisches Patentamt
European Patent Office
Office européen des brevets

(11) **EP 3 950 637 A1**

(12) **EUROPEAN PATENT APPLICATION**
published in accordance with Art. 153(4) EPC

(43) Date of publication:
**09.02.2022 Bulletin 2022/06**

(21) Application number: **20779356.3**

(22) Date of filing: **25.03.2020**

(51) International Patent Classification (IPC):
***C04B 35/115*** (2006.01)

(52) Cooperative Patent Classification (CPC):
**C04B 35/115**

(86) International application number:
**PCT/JP2020/013277**

(87) International publication number:
**WO 2020/196605 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2019 JP 2019058796**

(71) Applicants:
• **SUMITOMO CHEMICAL COMPANY LIMITED
Chuo-ku
Tokyo 104-8260 (JP)**
• **Japan Fine Ceramics Center
Nagoya-shi, Aichi 456-8587 (JP)**

(72) Inventors:
• **KIMURA, Teiichi
Nagoya-shi, Aichi 456-8587 (JP)**
• **SUEHIRO, Satoshi
Nagoya-shi, Aichi 456-8587 (JP)**
• **NASU, Tomomichi
Niihama-shi, Ehime 792-8521 (JP)**
• **UOE, Kousuke
Tsukuba-shi, Ibaraki 300-3294 (JP)**

(74) Representative: **Vossius & Partner
Patentanwälte Rechtsanwälte mbB
Siebertstraße 3
81675 München (DE)**

(54) **ALUMINUM SINTERED BODY PRODUCTION METHOD AND ALUMINUM SINTERED BODY**

(57)    A method for producing an alumina sintered body, comprising: molding an alumina powder to obtain an alumina article, the alumina powder comprising alumina particles having a particle diameter of not less than 0.1 µm and less than 1 µm, and alumina particles having a particle diameter of not less than 1 pm and less than 100 µm; forming a carbon powder-containing layer on a surface of the alumina article to obtain a laminate body; and irradiating a surface of the carbon powder-containing layer of the laminate body with a laser light to form a transparent alumina sintered portion.

*FIG. 4A*

EP 3 950 637 A1

## FIG. 4B

## FIG. 4C

## FIG. 4D

**Description**

TECHNICAL FIELD

The present disclosure relates to a method for producing an alumina sintered body and an alumina sintered body produced by the method, and more particularly to a method for producing an alumina sintered body including a transparent alumina sintered portion and an alumina sintered body produced by the method.

BACKGROUND ART

As a method of sintering ceramics that is for sintering, a method is known in which a layer containing a carbon powder is formed on a surface of an unsintered ceramic article and then the surface of the carbon powder-containing layer is irradiated with a laser light (for example, Patent Document 1). The unsintered ceramic article can be formed from an aggregate of ceramic particles for sintering.

PRIOR ART DOCUMENT

PATENT DOCUMENT

Patent Document 1: WO 2017/135387

SUMMARY OF THE INVENTION

PROBLEMS TO BE SOLVED BY THE INVENTION

Alumina single crystals are used as transparent members because they have translucency. As a method for producing an alumina single crystal, a Bernoulli method, a Czochralski method, etc. are known. These production methods, however, take a long time to obtain a single crystal. In addition, the Czochralski method requires a large-scale facility. For these reasons, these known methods are not suitable for producing many types of light-transmissive members in small lots. When the sintering method by laser irradiation described in Patent Document 1 is used, an alumina member can be produced in a short time in a small-scale facility. However, the alumina member (alumina sintered body) obtained by the sintering method is opaque, and a method for producing a transparent alumina sintered body has not been established.

An object of embodiments of the present invention is to provide a method for producing an alumina sintered body including a transparent alumina sintered portion that can be used as a transparent member, and an alumina sintered body obtained by the production method.

SOLUTIONS TO THE PROBLEMS

Aspect 1 of the present invention is a method for producing an alumina sintered body, comprising:

molding an alumina powder to obtain an alumina article, the alumina powder comprising alumina particles having a particle diameter of not less than 0.1 $\mu$m and less than 1 $\mu$m, and alumina particles having a particle diameter of not less than 1 $\mu$m and less than 100 $\mu$m;
forming a carbon powder-containing layer on a surface of the alumina article to obtain a laminate body; and
irradiating a surface of the carbon powder-containing layer of the laminate body with a laser light to form a transparent alumina sintered portion.

Aspect 2 of the present invention is the sintering method according to Aspect 1, wherein
the alumina article has a total pore volume of 0.20 mL/g or less, and a cumulative pore volume of pores having a pore diameter of 4 $\mu$m or more is less than 10% of the total pore volume.
Aspect 3 of the present invention is the sintering method according to Aspect 1 or 2, wherein
the alumina powder comprises:

30 to 95 vol% of alumina particles having a particle diameter of not less than 1 $\mu$m and less than 100 $\mu$m; and
5 to 70 vol% of alumina particles having a particle diameter of not less than 0.1 $\mu$m and less than 1 $\mu$m.

Aspect 4 of the present invention is an alumina sintered body including a transparent alumina sintered portion, wherein the alumina sintered portion has a transmittance in a visible light region of 50% or more, and has the number of single crystal-like structures per unit area of the alumina sintered portion is 0.2 /mm$^2$ or more and less than 25 /mm$^2$.

EFFECTS OF THE INVENTION

According to the embodiments of the present invention, a method for producing an alumina sintered body including a transparent alumina sintered portion that can be used as a transparent member, and an alumina sintered body obtained by the production method thereof are obtained.

BRIEF DESCRIPTION OF THE DRAWINGS

Fig. 1 is a schematic view showing one example of the alumina powder according to Embodiment 1.
Fig. 2 is a schematic view showing another example of the alumina powder according to Embodiment 1.
Fig. 3 is one example of a particle size distribution curve of alumina particles.
Figs. 4A to 4D are schematic cross-sectional views showing a method for producing the alumina sintered body according to Embodiment 1.
Figs. 5A to 5C are schematic cross-sectional views showing a method for producing the alumina sintered body according to Embodiment 2.
Fig. 6A is a schematic view taken from the upper surface side of the alumina sintered body according to Embodiment 3, and Fig. 6B is an enlarged schematic view of a transparent alumina sintered portion contained in the alumina sintered body of Fig. 6A.
Fig. 7 is a particle size distribution curve produced by plotting the particle sizes of alumina particles prepared in Examples and Comparative Examples with frequency as vertical axis and particle diameter as horizontal axis.
Fig. 8 is a particle size distribution curve produced by plotting the particle sizes of alumina particles prepared in Examples and Comparative Examples with cumulative distribution on volume basis as vertical axis and particle diameter as horizontal axis.
Fig. 9 is a graph of pore radius-cumulative pore volume for alumina article samples prepared in Examples and Comparative Examples.
Fig. 10 shows transmission spectra of the alumina sintered bodies prepared in Examples and Comparative Examples.
Figs. 11A is an optical microphotograph taken from the upper surface side of the alumina sintered body prepared in Example 1, and Fig. 11B is the optical microphotograph of Fig. 11A with drawing lines that indicate grain boundaries of single crystal-like structures.
Fig. 12A is an optical microphotograph taken from the upper surface side of the alumina sintered body prepared in Example 2, and Fig. 12B is the optical microphotograph of Fig. 12A with drawing lines that indicate grain boundaries of single crystal-like structures.

EMBODIMENTS OF THE INVENTION

<EMBODIMENT 1: method for producing alumina sintered body>

The method for producing an alumina sintered body according to the present embodiment is a method for producing an alumina sintered body including a transparent alumina sintered portion by sintering a molded article (an alumina article) formed from an alumina powder by laser irradiation, and includes the following Steps 1 to 3.

[Step 1] Molding an alumina powder including particles differing in particle diameter to prepare an alumina article.
[Step 2] Forming a carbon powder-containing layer on the surface of the alumina article to prepare a laminate body in which the alumina article and the carbon powder-containing layer are laminated.
[Step 3] Irradiating a surface of the carbon powder-containing layer of the laminate body with a laser light to sinter the alumina article, to prepare an alumina sintered body including a transparent alumina sintered portion.

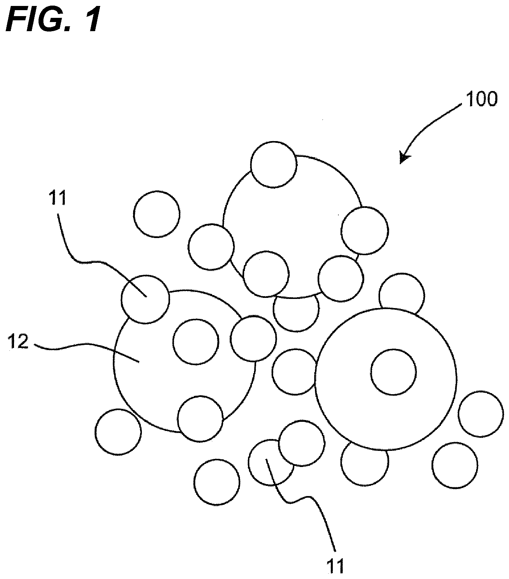

Hereinafter, a method for producing a transparent alumina sintered body according to Embodiment 1 will be described with reference to Figs. 1 to 4.

[Step 1] Preparation of alumina article 21

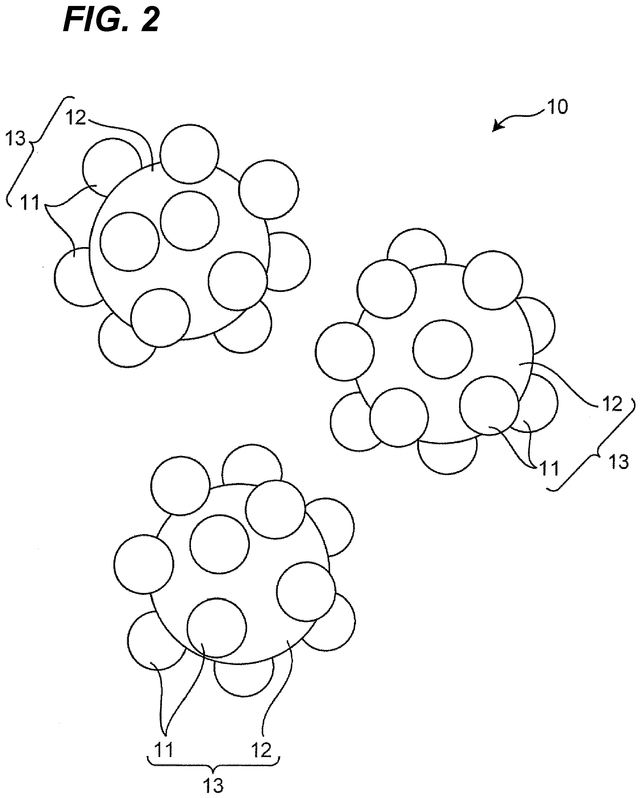

In Step 1, an alumina powder including particles differing in particle diameter are molded to prepare a molded article (an alumina article 21). The alumina powder shown in Figs. 1 and 2 including alumina particles having a particle diameter of not less than 0.1 $\mu$m and less than 1 $\mu$m (herein referred to as "alumina particles 11 having a smaller particle diameter") and alumina particles having a particle diameter of not less than 1 $\mu$m and less than 100 $\mu$m (herein referred to as "alumina particles 12 having a larger particle diameter") is used.

(First alumina powder 100 and second alumina powder 10)

In the present embodiment, the alumina powder suitable for an alumina article is roughly classified into two categories. The first alumina powder 100 shown in Fig. 1 is an alumina powder obtained by diffusing and mixing alumina particles 11 having a smaller particle diameter and alumina particles 12 having a larger particle diameter. The second alumina powder 10 shown in Fig. 2 is an alumina powder obtained by jet mill mixing the alumina particles 11 having the smaller particle diameter and the alumina particles 12 having the larger particle diameter. The second alumina powder 10 mainly includes alumina composite particles 13 in which the alumina particles 11 having the smaller particle diameter are bonded to the surfaces of the alumina particles 12 having the larger particle diameter.

Hereinafter, the first alumina powder 100 and the second alumina powder 10 will be sequentially described.

The first alumina powder 100 shown in Fig. 1 is obtained by diffusing and mixing the alumina particles 11 having the smaller particle diameter and the alumina particles 12 having the larger particle diameter with, for example, a mixer (a double cone blender) or the like. In the first alumina powder 100, it is presumed that the alumina particles 11 having the smaller particle diameter and the alumina particles 12 having the larger particle diameter are separated from each other, or are in contact with each other but are not in a bonded state.

The second alumina powder 10 shown in Fig. 2 is produced by mixing two kinds of alumina particles differing in particle diameter while pulverizing the particles with a jet mill (this is referred to as "jet mill mixing"). When jet mill mixing is performed, composite particles (referred to herein as "alumina composite particles 13") in which the alumina particles 11 having the smaller particle diameter are bonded to the surfaces of the alumina particles 12 having the larger particle diameter with sufficient strength are formed. That is, the second alumina powder 10 is an aggregate of a plurality of alumina composite particles 13 including the alumina particles 11 having the smaller particle diameter and the alumina particles 12 having the larger particle diameter.

Details of the method for preparing the second alumina powder 10 will be described later.

Here, "bonding with sufficient strength " is intended to mean that alumina particles having a smaller particle diameter do not fall off from alumina particles having a larger particle diameter by a normal operation (for example, filling into a mold for pressure molding). When the alumina composite particles 13 are dispersed in an aqueous solution and ultrasonic vibration is applied at an ultrasonic intensity of 40 W for 5 minutes or more, in many alumina composite particles 13, the alumina particles 11 having the smaller particle diameter will fall off from the surface of the alumina particles 12 having the larger particle diameter.

Here, the particle diameter, the content and the like, of the alumina particles 11 having the smaller particle diameter and the alumina particles 12 having the larger particle diameter which are contained in the second alumina powder 10, indicate the particle diameter, the content and the like of the alumina particles 11 having the smaller particle diameter and the alumina particles 12 having the larger particle diameter after separating the alumina composite 13 into them by ultrasonic vibration.

The alumina powders (the first alumina powder 100 and the second alumina powder 10), which include the alumina particles 11 having the smaller particle diameter and the alumina particles 12 having the larger particle diameter, have a remarkable feature; moldability in pressure molding is good, sinterability in sintering by laser irradiation is very good (they are referred to herein as "moldability" and "sinterability", respectively), and after sintering, a dense and transparent sintered portion can be formed. Preferably, the second alumina powder 10 containing the alumina composite particles 13 is used. The second alumina powder 10 is superior in moldability and sinterability, and can form a sintered portion having particularly high transparency. When an alumina powder consists of the alumina particles 11 having the smaller particle diameter, moldability and sinterability are good, but the sintered portion is opaque. In contrast, when an alumina powder consists of the alumina particles 12 having the larger particle diameter, moldability is extremely poor and an alumina article cannot be formed.

When the particle diameters of the alumina particles 11 having the smaller particle diameter and the alumina particles 12 having the larger particle diameter are measured, the alumina particles 11 having the smaller particle diameter preferably have a particle diameter of not less than 0.1 $\mu$m and less than 1 $\mu$m, and the alumina particles 12 having the larger particle diameter preferably have a particle diameter of not less than 1 $\mu$m and less than 100 $\mu$m. The particle diameter of the alumina particles 11 having the smaller particle diameter is more preferably not less than 0.3 $\mu$m and less than 0.8 $\mu$m, and particularly preferably not less than 0.4 $\mu$m and less than 0.7 $\mu$m. The particle diameter of the alumina particles 12 having the larger particle diameter is more preferably not less than 3 $\mu$m and less than 50 $\mu$m, and particularly preferably not less than 10 $\mu$m and less than 25 $\mu$m.

It is desirable that the first alumina powder 100 and the second alumina powder 10 each contain the alumina particles 11 having the smaller particle diameter and the alumina particles 12 having the larger particle diameter in appropriate amounts, respectively. The present inventors consider as follows: when an alumina sintered body 40 is produced by laser sintering, the alumina particles 12 having the larger particle diameter improve the transmittance of the alumina sintered portion 41, and therefore an alumina sintered body 40 having the transparent alumina sintered portion 41 can be formed by using the alumina powder containing the alumina particles 11 having the larger particle diameter. Since the alumina particles 12 having the larger particle diameter are poor in moldability, the alumina article 21 cannot be produced using only the alumina particles 12 having the larger particle diameter. By adding the alumina particles 11 having the smaller particle diameter to the alumina particles 12 having the larger particle diameter, moldability is improved, so that it becomes possible to produce the alumina article 21. That is, the alumina particles 12 having the larger particle diameter have a function of making it possible to form a transparent alumina sintered portion 41, and the alumina particles 11 having the smaller particle diameter have a function of improving the moldability of the alumina powder.

In order to more effectively exhibit those functions, the content of the alumina particles 11 having the smaller particle diameter is preferably 5 to 70 vol% and the content of the alumina particles 12 having the larger particle diameter is preferably 30 to 95 vol%. The content of the alumina particles 11 having the smaller particle diameter is more preferably 8 to 60 vol%, and particularly preferably 10 to 50 vol%. The content of the alumina particles 12 having the larger particle diameter is more preferably 40 to 92 vol%, and particularly preferably 50 to 90 vol%.

The first alumina powder 100 may consist of the alumina particles 11 having the smaller particle diameter and the alumina particles 12 having the larger particle diameter, and may include, in addition to these particles, other alumina particles (for example, alumina particles having a particle diameter of 100 $\mu$m or more and/or alumina particles having a particle diameter of less than 0.1 $\mu$m) as long as the effect of the embodiment of the present invention is not impaired.

In addition, the second alumina powder 10 may consist of the alumina composite particles 13 containing only the alumina particles 11 having the smaller particle diameter and the alumina particles 12 having the larger particle diameter, and in addition to the alumina composite particles 13, the second alumina powder 10 may include the alumina particles 11 having the smaller particle diameter and/or the alumina particles 12 having the larger particle diameter (which are particles that are not bonded to each other and remain in a separated state). Furthermore, the second alumina powder 10 may include, in addition to the alumina composite particles 13 and the alumina particles 11 having the smaller particle diameter and/or the alumina particles 12 having the larger particle diameter, other alumina particles (for example, alumina particles having a particle diameter of 100 $\mu$m or more and/or alumina particles having a particle diameter of less than 0.1 $\mu$m) as long as the effect of the embodiment of the present invention is not impaired.

In the case of the first alumina powder 100, the particle diameters and the contents of the alumina particles 11 having the smaller particle diameter and the alumina particles 12 having the larger particle diameter contained in the first alumina powder 100 are measured by dispersing the first alumina powder 100 in a solution and measuring the particle diameter by a laser diffraction dispersion method.

On the other hand, in the case of the second alumina powder 10, the particle diameters and the contents of the alumina particles 11 having the smaller particle diameter and the alumina particles 12 having the larger particle diameter contained in the second alumina powder 10 are measured by a laser diffraction dispersion method after the alumina particles 11 having the smaller particle diameter and the alumina particles 12 having the larger particle diameter are separated by the ultrasonic vibration. First, the second alumina powder 10 is dispersed in an aqueous solution, and ultrasonic vibration is applied at a vibration intensity of 40 W for 5 minutes or more. Almost all of the alumina composite particles 13 can thereby be separated into the alumina particles 12 having the larger particle diameter and the alumina particles 11 having the smaller particle diameter. Thereafter, the particle diameters of the alumina particles 12 having the larger particle diameter and the alumina particles 11 having the smaller particle diameter in a state of being dispersed in the solution are measured by a laser diffraction dispersion method.

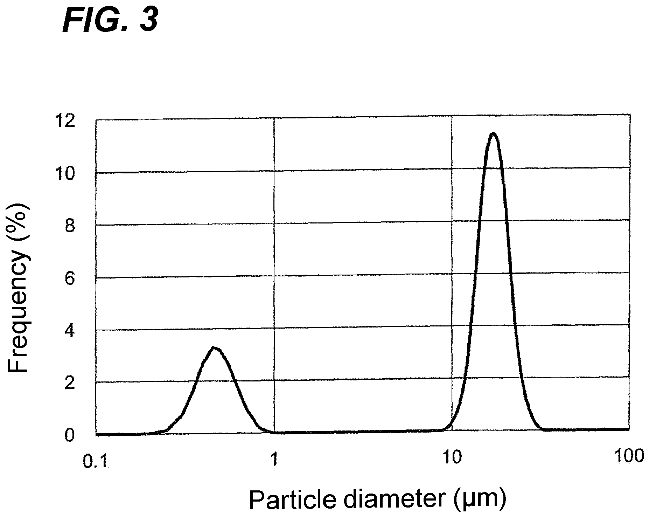

Based on the measurement results obtained, a particle size distribution curve (for example, Fig. 3) is produced by plotting the results with frequency as vertical axis and particle diameter as horizontal axis. In this particle size distribution curve, a particle diameter at a peak position located within a particle diameter range of less than 1 $\mu$m is defined as the particle diameter of the alumina particles 11 having the smaller particle diameter, and a particle diameter at a peak position located within a particle diameter range of 1 $\mu$m or more is defined as the particle diameter of the alumina particles 12 having the larger particle diameter.

The contents of the alumina particles 11 having the smaller particle diameter and the alumina particles 12 having the larger particle diameter can be determined from another particle size distribution curve.

Based on the measurement results of particle diameter obtained by the laser diffraction dispersion method described above, a particle size distribution curve (for example, Fig. 3) is produced by plotting the results with cumulative distribution on volume basis as vertical axis and particle diameter as horizontal axis. In this particle size distribution curve, a calculating result obtained by a formula of (cumulative distribution value at a particle diameter of 1 $\mu$m) - (cumulative distribution value at a particle diameter of 0.1 $\mu$m) is defined as a content of the alumina particles having the smaller particle diameter, and a calculating result obtained by a formula of (cumulative distribution value at a particle

diameter of 100 μm) - (cumulative distribution value at a particle diameter of 1 μm) is defined as a content of the alumina particles having the larger particle diamete.

(Preparation of second alumina powder 10)

A method for preparing the second alumina powder 10 shown in Fig. 2 will be described in detail.

The second alumina powder 10 can be produced by a method including: mixing, while crushing, first alumina particles having a specific surface area of not less than 1.5 m²/g and less than 15 m²/g and second alumina particles having a specific surface area of not less than 0.01 m²/g and less than 1.5 m²/g. Examples of such a method include a method including: mixing first alumina particles and second alumina particles with a jet mill (mixing step).

Hereinafter, one example of the mixing step will be described.

∘ Preparation of alumina particles

First alumina particles having a specific surface area of 1.5 m²/g or more and second alumina particles having a specific surface area of less than 1.5 m²/g are prepared. The first alumina particles preferably have a specific surface area of not less than 1.5 m²/g and less than 15 m²/g, more preferably not less than 2 m²/g and less than 10 m²/g. The second alumina particles preferably have a specific surface area of not less than 0.01 m²/g and less than 1.5 m²/g, more preferably not less than 0.03 m²/g and less than 1.0 m²/g.

∘ Premixing

The first alumina particles and the second alumina particles prepared are put into a bag. The bag is sealed and shaken to premix the first alumina particles and the second alumina particles, thereby obtaining a mixture. Upon premixing, a portion of the first alumina particles adheres to the surfaces of the second alumina particles with weak force. The blending ratio of the first alumina particles and the second alumina particles to be put into the bag is preferably from 20:80 to 80:20, and more preferably from 30:70 to 70:30 in mass ratio.

∘ Jet mill mixing

The mixture obtained by the premixing is jet mill mixed to obtain a second alumina powder 10.

Upon mixing with the jet mill, the first alumina particles collide with the second alumina particles during the mixing. At that time, the first alumina particles are crushed to become the "alumina particles 11 having a smaller particle diameter" in the second alumina powder 10, and the second alumina particles are crushed to become the "alumina particles 12 having a larger particle diameter" in the second alumina powder 10. In addition, the alumina particles 11 having the smaller particle diameter are strongly bonded to the surfaces of the alumina particles 12 having the larger particle diameter.

The alumina particles may include, in addition to the first alumina particles and the second alumina particles, other alumina particles (for example, alumina particles having a particle diameter of 100 μm or more and/or alumina particles having a particle diameter of less than 0.1 μm). Such other alumina particles (referred to as "third alumina particles") are preferably mixed with the first alumina particles and the second alumina particles with a jet mill. For example, in the step of " · Preparation of alumina particles", not only the first alumina particles and the second alumina particles but also the third alumina particles are prepared, and in the step of"· Premixing", the third alumina particles are put in a bag together with the first alumina particles and the second alumina particles, and are premixed to obtain a mixture of the first alumina particles, the second alumina particles and the third alumina particles. Then, in the step of" · Jet mill mixing", the obtained mixture is mixed with a jet mill, and thus a second alumina powder 10 can be obtained.

(Molding to alumina article 21)

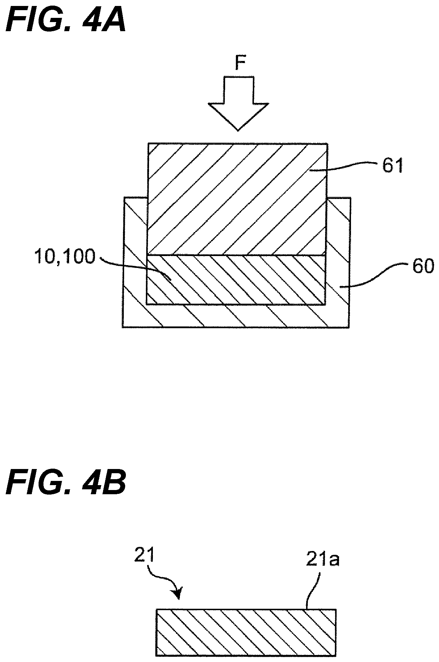

The first alumina powder 100 or the second alumina powder 10 is molded to obtain an alumina article 21. For example, as shown in Fig. 4A, the first alumina powder 100 or the second alumina powder 10 is charged into a mold 60 for molding, and pressed with a pressurizing jig 61 in the direction of arrow F to perform pressure molding. As a result, as shown in Fig. 4B, an alumina article 21 having a predetermined shape is obtained.

The alumina article 21 preferably has a total pore volume of 0.20 mL/g or less, and a cumulative pore volume of pores having a pore diameter of 4 μm or more is less than 10% of the total pore volume. When the alumina article 21 having such characteristics is sintered by laser irradiation, a denser transparent alumina sintered portion can be formed.

Such an alumina article 21 can be obtained by pressure-molding the first alumina powder 100 or the second alumina 10 at a pressure of from 10 MPa to 30 MPa.

Particularly preferably, the cumulative pore volume of pores having a pore diameter of 1 μm or more of the alumina article 21 is less than 10% of the total pore volume, and an extremely dense transparent alumina sintered portion can be formed. Such an alumina article 21 can be prepared by using a second alumina powder 10 prepared by jet mill mixing.

The pore volume and the pore radius are measured by a mercury intrusion method (JIS R 1655: 2003).

The cumulative amount of mercury entering the pores is measured while increasing the pressure applied to the mercury. For the obtained measurement results, the pressure is converted into a pore radius and the cumulative intrusion amount is converted into a cumulative pore volume. Then, using the converted values, a graph is produced by plotting cumulative pore volumes for the range of the pore radius of from 100 μm to 0.0018 μm.From this graph, the total pore volume and a cumulative pore volume at a predetermined pore radius are read.

Here, "a total pore volume of pores having a pore radius of 0.0018 μm or more" (sometimes simply referred to as "a total pore volume") is the total of the volumes of pores having a pore radius of 0.0018 μm or more and corresponds to the cumulative pore volume at a pore radius of 0.0018 μm on the graph.

The "cumulative pore volume of pores having a pore radius of 4 μm or more" (sometimes simply referred to as "cumulative pore volume of 4 μm or more") is the total of the volumes of pores having a pore radius of 4 μm or more, and corresponds to the cumulative pore volume at a pore radius of 4 μm on the graph. The "ratio of the cumulative pore volume of pores having a pore radius of 4 μm or more to total pore volume" (sometimes simply referred to as the "proportion of pores of 4 μm or more") is calculated from the following Equation (1).

$$\text{Proportion of pores of 4 μm or more} = (\text{cumulative pore volume of 4 μm or more})/(\text{total pore volume}) \times 100 \ (\%) \ \cdots (1)$$

Similarly, the "ratio of cumulative pore volume of pores having a pore radius of 1 μm or more to total pore volume" (also simply referred to as the "proportion of pores of 1 μm or more") is calculated from the following Equation (2).

$$\text{Proportion of pores of 1 μm or more} = (\text{cumulative pore volume of 1 μm or more})/(\text{total pore volume}) \times 100 \ (\%) \ \cdots (2)$$

[Step 2] Preparation of laminate body 20

In Step 2, a carbon powder-containing layer 22 is formed on the surface 21a of the alumina article 21. As a result, a laminate body 20 in which the alumina article 21 and the carbon powder-containing layer 22 are laminated is obtained. The carbon powder contained in the carbon powder-containing layer 22 will generate heat by absorbing the laser light which will be applied in the following [Step 3], whereby the alumina article 21 on the lower side of the carbon powder-containing layer 22 will be sintered.

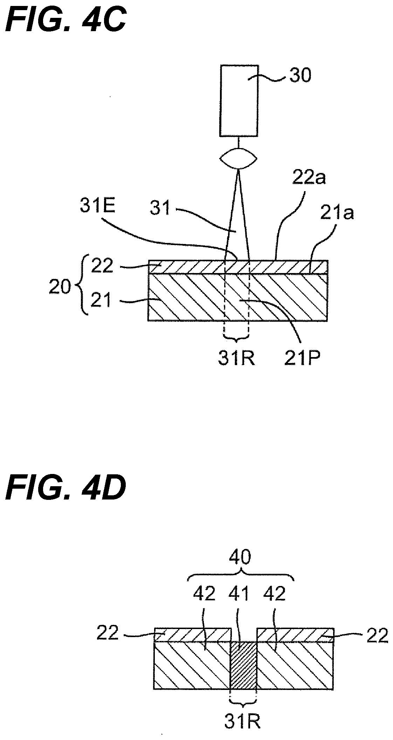

Examples of a method form forming the carbon powder-containing layer 22 include a dispersion (spraying) method such as spraying, a printing method such as screen printing, and a coating method such as a doctor blade method, a spin coating method, or a curtain coater method, by using only a carbon powder, a composition including a carbon powder and a binder, or a composition including a carbon powder and an organic solvent. The carbon powder-containing layer 22 may be formed throughout the surface 21a of the alumina article 21, as shown in Fig. 4C, or may be partially formed only at predetermined positions on the surface 21a.

The content of the carbon powder contained in the carbon powder-containing layer 22 is preferably 50 mass% or more, and more preferably 80 mass% or more from the viewpoint of enhancing laser absorptivity. The thickness of the carbon powder-containing layer 22 is preferably 5 nm to 30 μm, and more preferably 100 nm to 10 μm from the viewpoint of enhancing the laser absorptivity.

[Step 3] Preparation of alumina sintered body 40

In Step 3, the surface 22a of the carbon powder-containing layer 22 of the laminate body 20 is irradiated with a laser light to prepare an alumina sintered body 40 including a transparent alumina sintered portion 41. Here, the "alumina sintered body 40" means a body at least partially including a transparent alumina sintered portion 41. Thus, the alumina sintered body 40 may partially include an opaque non-sintered portion 42, and may further partially include an opaque alumina sintered portion (not shown). The alumina sintered body 40 preferably includes only the transparent alumina sintered portion 41.

When a predetermined position on the surface 22a of the carbon powder-containing layer 22 is irradiated with a laser light 31 from a laser device 30 as shown in Fig. 4C, the carbon powder in the carbon powder-containing layer 22 absorbs the energy of the laser light at the irradiated position 31E that is irradiated with the laser light. As a result, the carbon powder-containing layer 22 present in the irradiated position 31 generates heat, and disappears instantly. Then, in the alumina article 21 located under the carbon powder-containing layer 22, a portion 31P existing in a region immediately below the irradiated position 31E (this region is referred to as "immediately below region 31R") is preheated to 800°C or higher (estimated temperature). When the portion 21P of the alumina article 21 (since the carbon powder-containing layer 22 on the surface of the portion 21P has already disappeared, the surface of the portion 21P is exposed) is further irradiated with a laser light, the temperature rises. As a result, the alumina powder in the portion 21P is sintered to form an alumina sintered portion 41 (Fig. 4D). Thus, the alumina sintered portion 41 can be locally formed only at a desired position (portion 21P) of the alumina article 21.

The alumina article 21 may has a non-sintered portion 42 which is located outside the immediately below region 31R that is immediately below the irradiated position 31E thereby being not sintered. The non-sintered portion 42 may be removed as necessary, and the non-sintered portion 42 may be sintered by further performing laser irradiation to enlarge the alumina sintered portion 41.

In Embodiment 1, since the alumina article 21 is formed using the alumina powder (the first alumina powder 100 or the second alumina powder 10) which includes the alumina particles 11 having the smaller particle diameter and the alumina particles 12 having the larger particle diameter. When a laser light is applied to the alumina article 21, the first alumina powder 100 or the second alumina powder 10 which contains the alumina particles 12 can be densely sintered to form a transparent alumina sintered portion 41. The non-sintered portion 42 is opaque. Here, "transparent" means that the transmittance of visible light is 50% or more, "translucent" means that the transmittance of visible light is not less than 10% and less than 50%, and "opaque" means that the transmittance of visible light is less than 10%. Here, the term "visible light" refers to light having a wavelength in a visible light region, and the term "visible light region" refers to a wavelength region of from 360 to 830 nm.

The transparent alumina sintered portion 41 formed in the embodiments of the present invention has anisotropy in the internal structure (mainly the grain boundary orientation of crystal grains) depending on the laser irradiation direction. Due to the anisotropy of the internal structure, anisotropy of the transmittance of visible light may occur. In this case, "transparent", "translucent", and "opaque" are determined based on the transmittance of visible light measured in a direction in which the highest transmittance is exhibited.

The laser light 31 may be applied only to a part (a predetermined position) of the surface 22a of the carbon powder-containing layer 22 as shown in Fig. 4C, or may be applied to the entire surface 22a of the carbon powder-containing layer 22. Examples of a method of applying the laser light 31 to the entire surface 22a include a method of simultaneously irradiating the entire surface using a laser light 31 having a large spot diameter (simultaneous irradiation) and a method of irradiating the entire surface 22a by relatively moving the position irradiated with the laser light 31 having a small spot diameter (scanning irradiation). Examples of the scanning irradiation include a method of scanning a laser light with the laminate body 20 fixed, a method of applying a laser light while changing the optical path of the laser light through a light diffusion lens, and a method of applying a laser light while moving the laminate body 20 with the optical path of the laser light fixed.

The type of the laser to be used is not particularly limited, but from the viewpoint of enhancing the laser absorptivity, it is preferable to use a laser light in a wavelength range (from 500 nm to 11 $\mu$m) where a high rate of absorption by carbon powder is exhibited. For example, an Nd:YAG laser, an Nd:YVO laser, an Nd:YLF laser, a titanium sapphire laser, or a carbon dioxide laser can be used.

The laser irradiation conditions are appropriately chosen depending on the sintering area, the sintering depth, etc. The laser power is preferably 50 to 2000 W/cm$^2$, and more preferably 100 to 500 W/cm$^2$ from the viewpoint of appropriately progressing sintering. The irradiation time is preferably 1 second to 60 minutes, and more preferably 5 seconds to 30 minutes.

The atmosphere for irradiating the carbon powder-containing layer 22 with a laser light is not particularly limited, and may be, for example, the air, nitrogen, argon, or helium. The alumina article 21 and/or the carbon powder-containing layer 22 may be preheated before laser irradiation. The preheating temperature is preferably 300°C or higher, more preferably 400°C or higher, and the upper limit of the preheating temperature is usually a temperature that is 200°C or more lower than the melting point of the ceramics for sintering. The preheating can be performed by, for example, an infrared lamp, a halogen lamp, resistance heating, highfrequency induction heating, or microwave heating.

When a laser light is applied to the entire surface of the carbon powder-containing layer 14 in the laminate body 20, the entirety of the article 12 which is located below the laser irradiated portion on the carbon powder-containing layer 14 can sintered to be the sintered portion 16. For this reason, when a larger area of the article 12 is to be sintered, a method of applying a laser light while scanning the laser light or while changing the optical path through a light diffusion lens with the laminate body 10 fixed, or a method of applying a laser light with the optical path fixed while moving the laminate body 10 can be applied.

<Embodiment 2: method for producing transparent alumina sintered body 40>

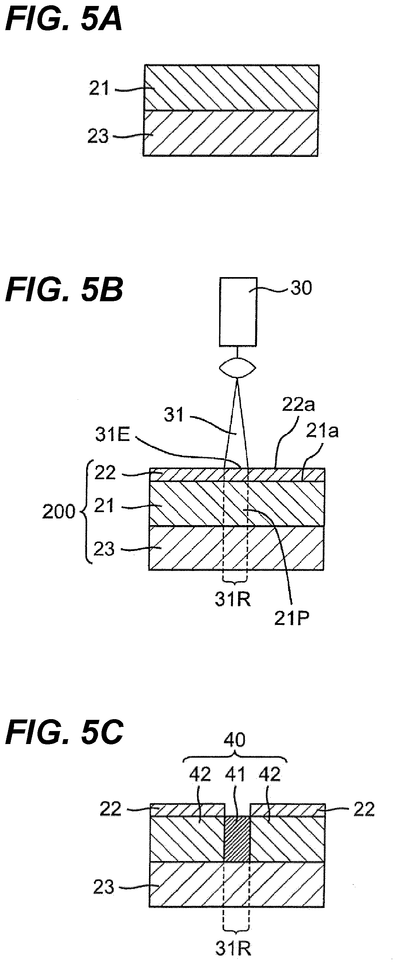

Figs. 5A to 5C are schematic cross-sectional views for explaining the method for producing the transparent alumina sintered body 40 according to Embodiment 2. Embodiment 2 is different from Embodiment 1 in that an alumina article 21 is formed on a base material 23, but is the same as Embodiment 1 in other points. Hereinafter, differences from Embodiment 1 will be mainly described.

[Step 1] Preparation of alumina article 21

As shown in Fig. 5A, a first alumina powder 100 or a second alumina powder 10 which includes particles differing in particle diameter are molded on a base material 23 to prepare a molded article (alumina article 21) on the base material 23.

The base material 23 is preferably made of at least one selected from metals, alloys, and ceramics. As a method of forming the alumina article 21 on the base material 23, the alumina article can be formed by a conventionally known method, such as a thermal spraying method; an electron beam physical vapor deposition method; a laser chemical vapor deposition method; a cold spraying method; and a method including applying a slurry containing ceramic particles for sintering, a dispersion medium, and a polymer binder to be used as necessary, then drying the slurry, and further degreasing the slurry. The base material 23 and the alumina article 21 may be joined, or the alumina article 21 may be placed on the base material 23 without being joined.

[Step 2] Preparation of laminate body 20

As shown in Fig. 5B, a carbon powder-containing layer 22 is formed on the surface 21a of the alumina article 21. As a result, a laminate body 200 in which the base material 23, the alumina article 21, and the carbon powder-containing layer 22 are laminated is obtained.

[Step 3] Preparation of alumina sintered body 40

As shown in Fig. 5C, the surface 22a of the carbon powder-containing layer 22 of the laminate body 200 is irradiated with a laser light to form a transparent alumina sintered portion 41 in the alumina article 21. As a result, an alumina sintered body 40 including the transparent alumina sintered portion 41 and the non-sintered portion 42 is formed on the base material 23.

<Embodiment 3: alumina sintered body 40>

Embodiment 3 relates to an alumina sintered body 40 obtained by sintering an alumina article 21 by laser irradiation by the method described in Embodiments 1 and 2.

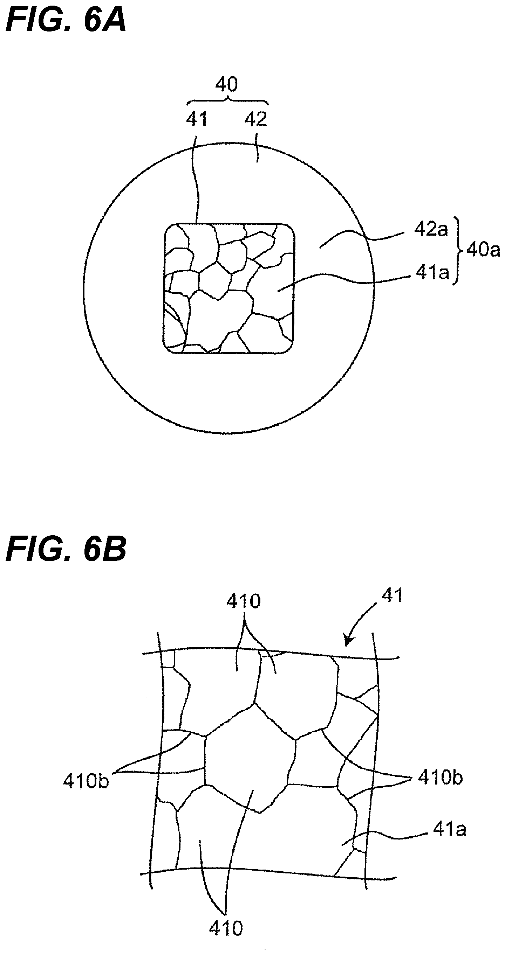

Fig. 6A is a schematic view taken from the upper surface side for explaining the alumina sintered body 40 according to Embodiment 3. The alumina sintered body 40 includes a transparent alumina sintered portion 41. Further, the alumina sintered body 40 may include an opaque non-sintered portion 42. The alumina sintered body 40 shown in Fig. 6A includes an alumina sintered portion 41 and a non-sintered portion 42 surrounding the periphery of the alumina sintered portion.

The "upper surface" in Fig. 6A corresponds to a surface irradiated with a laser light during sintering. That is, the surface 21a of the alumina article 21 in Embodiment 1 (Fig. 4C) or Embodiment 2 (Fig. 5B) becomes the upper surface 40a of the alumina sintered body 40 after sintering. In Fig. 6A, the upper surface 40a of the alumina sintered body 40 includes the surface 41a of the transparent alumina sintered portion 41 and the surface 42a of the non-sintered portion 42.

Fig. 6B is an enlarged schematic view of a part of the alumina sintered portion 41 in the alumina sintered body 40 shown in Fig. 6A. The alumina sintered portion 41 is transparent, and when observed from the upper surface 41a side, it can be visually recognized that the alumina sintered portion is composed of a plurality of single crystal-like structures 410. The "single crystal-like structure 410" is a crystal grain surrounded by grain boundaries 410b. In one single crystal-like structure 410 (that is, one crystal grain), the crystal orientations are uniform. Each single crystal-like structure 410 can be regarded as a small single crystal.

Each single crystal-like structure 410 has high transparency. As a result, in the alumina sintered body 40 of Embodiment 3, the alumina sintered portion 41 becomes transparent (the transmittance of visible light is 50% or more). Thus, the alumina sintered portion 41 can be used as a transparent window material, or can be used as a transparent covering material by forming the alumina sintered portion 41 on the surface of another member.

A method for measuring the transmittance of the alumina sintered portion 41 will be described later. When the alumina sintered body 40 is produced on the base material 23 as shown in Fig. 5C, the transmittance of the transparent alumina sintered portion 41 is measured after the base material 23 is removed.

The grain boundaries 41b included in the alumina sintered portion 410 have an effect of scattering light. Thus, the smaller the number of grain boundaries 410b, the higher the transmittance of the alumina sintered portion 41 in the visible light region. In the alumina sintered body 40 of Embodiment 3, when the alumina sintered portion 41 is observed from the upper surface 41a side, the number of the single crystal-like structures 410 contained in the alumina sintered portion 41 per unit area is 0.2 /mm$^2$ or more and less than 25 /mm$^2$. Since the grain boundaries 410b surround the single crystal-like structure 410, the number of grain boundaries per unit area decreases when the number of the single crystal-like structures 410 per unit area decreases. Thus, the transmittance of the alumina sintered portion 41 can be improved by limiting the number of the single crystal-like structures 410 to less than 25 /mm$^2$.

In the case of an alumina sintered body 40 manufactured by laser sintering, the boundaries in the alumina sintered portion 41 cannot be completely eliminated. In the case of an alumina sintered body 40 obtained by laser sintering, from a realistic viewpoint, the number of the single crystal-like structures 410 contained in the alumina sintered portion 41 per unit area is 0.2 /mm$^2$ or more. Thus, the transmittance of the alumina sintered portion 41 is usually lower than that of transparent alumina containing almost no grain boundary 410b like single crystal alumina manufactured by the Czochralski method or the like.

The number of the single crystal-like structures 410 contained in the alumina sintered portion 41 per unit area is determined as follows.

In an optical microphotograph, a square region of 3 mm on each side is defined at an arbitrary position on the alumina sintered portion 41, and the number (N) of the single crystal-like structures 410 in the square region is counted. The number of the single crystal-like structures 410 per unit area ( /mm$^2$) is calculated by dividing the number (N) by the area of the square region (9 mm$^2$).

When defining a square region, it is necessary to define such that the non-sintered portion 42 is not included in the squire region. In principle, the number N is counted in a square region of 3 mm on each side, but when the alumina sintered portion 41 has a small area and any square region of 3 mm on each side cannot be defined on the alumina sintered portion 41, the area of the region to be defined may be exceptionally narrowed, such as a square region of 2 mm on each side or a rectangular region of 3 mm × 2 mm.

The grain boundaries 410b tend to be arranged along the laser irradiation direction. That is, as illustrated in Figs. 4C and 5B, when a laser light is applied vertically downward (in Figs. 4C and 5B, the thickness direction of the alumina article 21) from the surface 21a side of the alumina article 21, many of the grain boundaries 410b are likely to occur in the alumina sintered portion 41 vertically downward (along the thickness direction of the alumina sintered portion 41) from the upper surface 41a. Thus, when the transmittance of the alumina sintered portion 41 is measured in a direction which is the same as the laser irradiation direction during manufacturing, a high transmittance tends to be exhibited. For this reason, as described later, it is necessary to sufficiently consider the direction of the grain boundaries 41b when the transmittance of the sintered portion 41 is measured.

In addition, the laser irradiation direction during sintering can be estimated from the direction of the grain boundary 410b. The direction of the grain boundary 410b can be observed by upper surface observation, cross-sectional observation, or fracture surface observation of the alumina sintered portion 41.

Next, the transmittance of the alumina sintered portion 41 will be described.

The transmittance of the alumina sintered portion 41 can be measured using a wavelength-tunable absorption spectrometer or the like. For example, an ultraviolet-visible light absorption spectrometer capable of measuring absorbance of a solid in a range of an ultraviolet wavelength to an infrared wavelength is suitable.

In general, the transmittance varies depending on the measurement wavelength. Furthermore, in the case of the alumina sintered body 40 of Embodiment 3, even if the wavelength is the same, the transmittance may vary depending on the direction of light incident on the alumina sintered portion 41 for the following reasons.

In the measurement of the transmittance of the alumina sintered portion 41, if there are grain boundaries 410b on a path of a light for measurement, the light is scattered, thereby decreasing the transmittance. On the other hand, when the number of the grain boundaries 410b on the path of the light for measurement is small, scattering of light by the grain boundaries 410b does not occur, thereby increasing the transmittance. As described above, in the case of an alumina sintered body 40 produced by laser sintering, the grain boundaries 41b in the alumina sintered portion 410 tend to be aligned in the laser irradiation direction. Since the alumina sintered portion 41 has anisotropy in the existence direction of the grain boundaries 410b as described above, it is expected that the transmittance also has anisotropy.

Here, the transmittance of 50% or more in the visible light region means that the transmittance is 50% or more in the entire visible light region (wavelength region of 360 to 830 nm) when the transmittance is measured in a measurement direction in which the highest transmittance (maximum transmittance) is exhibited. Thus, when the transmittance of an alumina sintered portion 41 having a transmittance (maximum transmittance) of 50% or more is measured in a different measurement direction, the transmittance in the different measurement direction may be lower than the maximum transmittance (for example, less than 50%).

The alumina sintered body 40 of Embodiment 3 is expected to be used as a light-transmissive member because the alumina sintered portion 41 is transparent.

Since the alumina sintered portion 41 has grain boundaries 410b unique to laser sintering, there is a possibility that anisotropy occurs in transmittance. For this reason, there is a possibility that the visibility from a specific direction can be made high and the visibility from other directions can be made low. Thus, the alumina sintered body is expected to be used as a protective film for a liquid crystal screen or the like.

Furthermore, when the alumina sintered body 40 is formed on the surface of another member, there is a possibility that tensile stress or compressive stress is applied to the alumina sintered body 40 due to a difference in thermal expansion coefficient between the alumina sintered body 40 and the another member. Even if the alumina sintered body 40 is used alone, when it is rapidly heated or rapidly cooled, tensile stress or compressive stress may be applied to the inside of the alumina sintered body 40. Even in such a case, it is expected that the grain boundaries 41b present in the alumina sintered portion 410 can relax these stresses and suppress breakage of the alumina sintered body 40.

EXAMPLES

(1) Production of alumina powder sample

The preparation conditions for the alumina powder samples, the molding conditions for the alumina articles prepared by pressure-molding alumina powder samples, and the sintering conditions in the laser sintering of alumina articles used in Examples 1 and 2 and Comparative Example 1 will be described below. Blending ratios of the first alumina particles, the second alumina particles, and the third alumina particles used for the preparation of the alumina powder samples of Examples 1 to 2 and Comparative Example 1 are shown in Table 1. In the column of each alumina particles in Table 1, a symbol "-" means that said alumina particles were not blended.

(Example 1)

$\alpha$-Alumina particles having an average particle diameter of 0.25 $\mu$m were mixed with high-purity aluminum hydroxide obtained by a hydrolysis method of an aluminum alkoxide, and then the mixture was calcined in a hydrogen chloride atmosphere, to obtain first alumina particles having a specific surface area of 4.8 $m^2$/g. High-purity aluminum hydroxide obtained by a hydrolysis method of an aluminum alkoxide was calcined in a hydrogen chloride atmosphere, to obtain second alumina particles having a specific surface area of 0.2 $m^2$/g. The first alumina particles and the second alumina particles were blended at a mass ratio of 30:70 and put into a plastic bag. The plastic bag was sealed and strongly shaken up and down to diffuse and mix the particles blended. Thereafter, the mixture was mixed while being pulverized with a jet mill pulverizer (horizontal jet mill pulverizer PJM-280SP manufactured by Nippon Pneumatic Mfg. Co., Ltd.), and thus an alumina powder sample of Example 1 was prepared.

300 mg of the alumina powder sample was separated and loaded into a mold for pellet molding (having a cylindrical shape with an inner diameter of 10 mm), and pressurized at 10 MPa for 30 seconds with a uniaxial pressing machine, to obtain an alumina pellet for sintering (an alumina article sample). The surface of the alumina article sample was sprayed with aerosol dry graphite film-forming lubricant "DGF spray" (product name) manufactured by Nippon Ship Tool Co., Ltd. for about 1 second. Thereafter, the resultant was allowed to stand for 30 seconds, to obtain a laminate sample having a carbon powder-containing layer having a thickness of about 5$\mu$m.

Subsequently, the surface of the carbon powder-containing layer of the laminate sample was irradiated with a laser light having a wavelength of 1064 nm and an output of 500W for 1 minute. At this time, the beam diameter of the laser light on the surface of the carbon powder-containing layer was adjusted to 10 mm, and the position of the laser light was adjusted such that the entire alumina article sample (diameter: 10 mm) could be laser sintered. As a result, the entire alumina article sample was sintered and an alumina sintered body sample including no non-sintered portion (in other words, wholly consisted of an alumina sintered portion) was obtained.

(Example 2)

$\alpha$-Alumina seed particles having an average particle diameter of 0.25 $\mu$m were mixed with high-purity aluminum hydroxide obtained by a hydrolysis method of an aluminum alkoxide, and then the mixture was calcined in a hydrogen chloride atmosphere, obtaining third alumina particles having a specific surface area of 0.5 $m^2$/g. Samples of Example 2 were obtained in the same manner as those obtained in Example 1 except that the third alumina particles were used instead of the first alumina particles in Example 1.

(Comparative Example 1)

Samples of Comparative Example 1 were obtained in the same manner as those obtained in Example 1 except that an alumina powder sample was prepared by pulverizing only the first alumina particles with a jet mill pulverizer (horizontal jet mill pulverizer PJM-380SP manufactured by Nippon Pneumatic Mfg. Co., Ltd.).

[Table 1]

| | First alumina particles | Second alumina particles | Third alumina particles |
|---|---|---|---|
| | Blending ratio (% by mass) | Blending ratio (% by mass) | Blending ratio (% by mass) |
| Example 1 | 70 | 30 | - |
| Example 2 | - | 30 | 70 |
| Comparative Example 1 | - | 100 | - |

(2) Measurement of particle size distribution of alumina powder sample

For the alumina powder samples of Examples 1 and 2 and Comparative Example 1, the particle size distributions thereof were measured.

The particle size distribution measurements were performed using a laser particle size distribution analyzer ["Microtrac MT3300 EXII" manufactured by MicrotracBEL Corp.]. A small amount of the alumina powder to be measured was added to a 0.2 mass% aqueous sodium hexametaphosphate solution (hereinafter also referred to as "dispersion liquid"), and alumina particles were dispersed with an ultrasonic disperser built in the analyzer at 40 W for 5 minutes. The refractive index of alumina was defined to be 1.76.

The alumina powder samples of Examples 1 and 2 contained alumina composite particles 13 (in which alumina particles 11 having a smaller particle diameter and alumina particles 12 having a larger particle diameter were bonded). The alumina composite particles 13 did not separate even when the dispersion liquid was added, but were separated into the alumina particles 11 having the smaller particle diameter and the alumina particles 12 having the larger particle diameter when ultrasonic dispersion was subjected.

The alumina powder sample of Comparative Example 1 consisted of the alumina particles 11 having the smaller particle diameter. Since the particles were just in contact with each other, they easily separated when the dispersion liquid was added.

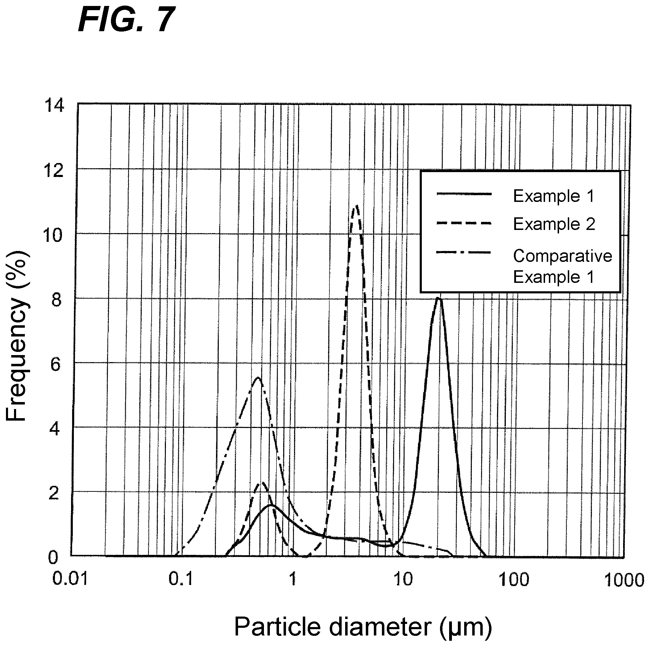

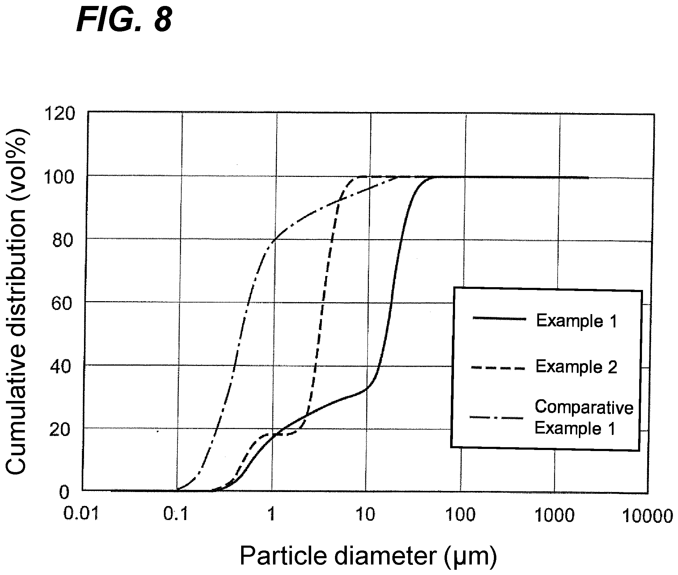

Fig. 7 is a particle size distribution curve obtained by using a laser diffraction method, with frequency as vertical axis and particle diameter as horizontal axis. In the particle size distribution curve of Fig. 7, a particle diameter at a peak position located within a particle diameter range of less than 1 $\mu$m was defined as the particle diameter (peak particle diameter) of the alumina particles 11 having the smaller particle diameter, and a particle diameter at a peak position located within a particle diameter range of 1 $\mu$m or more was defined as the particle diameter (peak particle diameter) of the alumina particles 12 having the larger particle diameter. In addition, Fig. 8 is a particle size distribution curve obtained by using a laser diffraction method, with cumulative distribution on volume basis as vertical axis and particle diameter as horizontal axis. In the particle size distribution curve of Fig. 8, a calculating result obtained by a formula of (cumulative distribution value at a particle diameter of 1 $\mu$m) - (cumulative distribution value at a particle diameter of 0.1 $\mu$m) was defined as a content (vol%) of the alumina particles 11 having the smaller particle diameter, and a calculating result obtained by a formula of (cumulative distribution value at a particle diameter of 100 $\mu$m) - (cumulative distribution value at a particle diameter of 1 $\mu$m) was defined as a content (vol%) of the alumina particles 12 having the larger particle diameter.

For each of the alumina powder samples of Examples 1 and 2 and Comparative Example 1, the peak particle diameter and the content of the alumina particles 11 having the smaller particle diameter as well as the peak particle diameter and the content of the alumina particles 12 having the larger particle diameter are shown in Table 2.

As can be seen from the particle size distribution curve of Fig. 7, in the graph of Comparative Example 1, there was no peak within the particle diameter range of 1 $\mu$m or more. Therefore, in the column of "peak particle diameter" of the alumina particles 12 having the larger particle diameter in Table 2, a symbol "-" was written in order to indicate that no peak was observed.

In addition, as can be seen from the particle size distribution curve of Fig. 7, a skirt of the peak of the alumina particles 11 having the smaller particles of Comparative Example 1 extended beyond the particle diameter of 1 $\mu$m. That is, there were alumina particles having a particle diameter of 1 $\mu$m or more in the alumina powder of Comparative Example 1 though no peak was found within the particle diameter range of 1 $\mu$m or more in the particle size distribution curve of Fig. 7. Therefore, as shown in Table 2, in Comparative Example 1, there was no "peak particle diameter" of the alumina particles 12 having the larger particle diameter (denoted as the symbol "-"), but the content of the alumina particles 12 having the larger particle diameter (that is, alumina particles having a particle diameter of 1 $\mu$m or more) was not 0.

[Table 2]

| | Alumina particles 11 having a smaller particle diameter | | Alumina particles 12 having a larger particle diameter | |
|---|---|---|---|---|
| | Peak particle diameter (pm) | Content (vol%) | Peak particle diameter ($\mu$m) | Content (vol%) |
| Example 1 | 0.3 | 17 | 18 | 83 |
| Example 2 | 0.4 | 18 | 3 | 82 |
| Comparative Example 1 | 0.4 | 80 | - | 20 |

(3) Measurement of pore distribution of alumina article sample

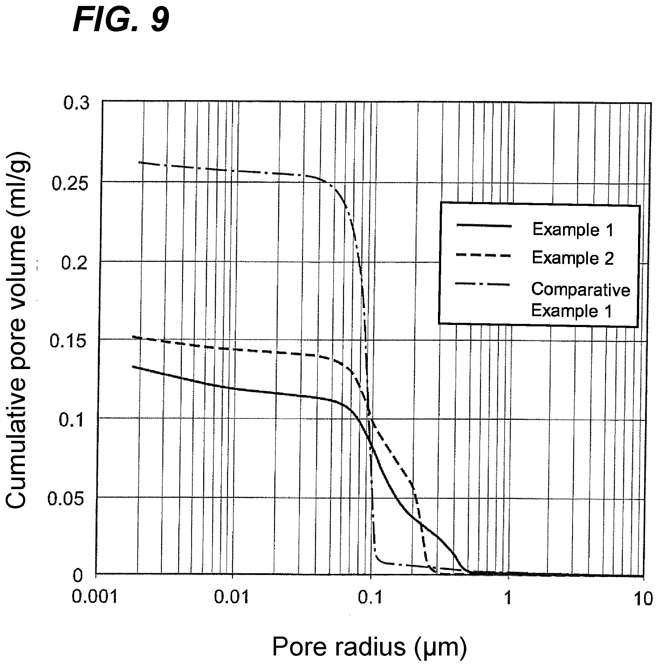

4 g of each of the alumina powder samples of Examples 1 and 2 and Comparative Example 1 was separated, 0.04 g of water (corresponding to 1% by mass of the alumina powder sample) was added thereto, and the mixture obtained was put into a plastic bag. The plastic bag was sealed and strongly shaken up and down to diffuse and mix the mixture obtained. The mixture obtained is loaded into a mold for pellet molding (having a cylindrical shape with an inner diameter of 20 mm), and pressurized at 30 MPa for 30 seconds with a uniaxial pressing machine. As a result, an alumina powder pellet (20 mm in diameter, 4 to 6 mm in thickness) was obtained. The alumina powder pellet was dried at 120°C for 4 hours, to obtain an alumina article sample for measurement. After drying at 120°C for 4 hours, the alumina article sample was measured by the mercury intrusion method (JIS R 1655:2003) using an AutoPore IV 9520 (manufactured by Micromeritics Instrument Corporation). The measurement was performed in a range of a pore radius of from 100 $\mu$m to 0.0018 $\mu$m. Based on the measurement results, a graph was produced by plotting the results with particle radius as horizontal axis and cumulative pore volume as vertical axis (see Fig. 9).

The cumulative pore volume at a pore radius of 4 $\mu$m (cumulative pore volume of pores having a pore radius of 4 $\mu$m or more) was defined as "cumulative pore volume (A) of 4 $\mu$m or more".

The cumulative pore volume at 0.0018 $\mu$m (total pore volume of pores with a pore radius of 0.0018 $\mu$m or more) was defined as "total pore volume (B)".

The "proportion of pores of 4 $\mu$m or more (A/B $\times$ 100)" (proportion of pores having a pore radius of 4 $\mu$m or more) was calculated from the following Equation (1).

$$\text{Proportion of pores of 4 } \mu\text{m or more} = (\text{cumulative pore volume of 4 } \mu\text{m or more})/(\text{total pore volume}) \times 100 \ (\%) \ \cdots (1)$$

For the alumina article sample molded from each of the alumina powder samples of Examples 1 and 2 and Comparative Example 1, the measurement results of the cumulative pore volume (A) of 4 $\mu$m or more, the total pore volume (B), and the proportion of pores of 4 $\mu$m or more (A/B $\times$ 100) are shown in Table 3.

[Table 3]

| | Cumulative pore volume A (mL/g) of 4 $\mu$m or more | Total pore volume B (mL/g) | Proportion of cumulative pore volume of 4 $\mu$m or more A/B $\times$ 100(%) |
|---|---|---|---|
| Example 1 | 0.0017 | 0.1327 | 1.3 |
| Example 2 | 0.0013 | 0.1521 | 0.9 |
| Comparative Example 1 | 0.0020 | 0.2623 | 0.8 |

(4) Measurement of transmission spectrum of alumina sintered portion

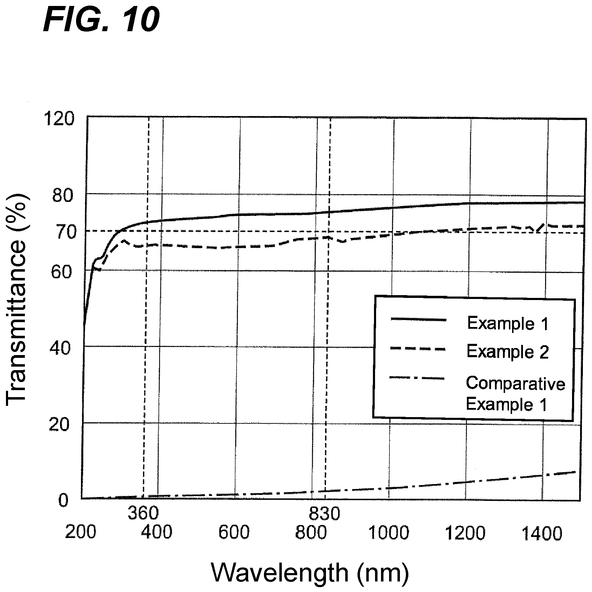

Transmission spectra of the alumina sintered portions of the alumina sintered body samples obtained in Examples 1 and 2 and Comparative Example 1 were measured using an ultraviolet-visible absorption spectrometer (Perkin-Elmer Lambda 950) (Fig. 10). An alumina sintered body sample was set in the spectrometer such that a measurement direction (a light transmission direction) of the transmittance measurement was aligned with the laser irradiation direction during sintering. In addition, the size of the beam was adjusted to about 2 mm × 4 mm, and the thickness of the sample was adjusted to 0.8 mm.

The transmittance range in the visible light region of 360 nm to 830 nm is shown in Table 4. In the "evaluation" in Table 4, a case where the minimum value of the transmittance in the visible light region was less than 50% was rated "not acceptable", a case where the minimum value was 50% or more was rated "good", and a case where the minimum value was 70% or more was rated "excellent".

[Table 4]

|  | Transmittance (%) in visible light region at wavelength of from 360 nm to 830 nm | Evaluation |
|---|---|---|
| Example 1 | 72.3 to 75.0 | Excellent |
| Example 2 | 66.0 to 68.5 | Good |
| Comparative Example 1 | 0.85 to 2.40 | Not acceptable |

(5) Single crystal-like structure of alumina sintered portion

An optical microphotograph was taken from the upper surface side of each of the alumina sintered body samples prepared in Example 1 and Example 2, and the number of the single crystal-like structures per unit area was measured.

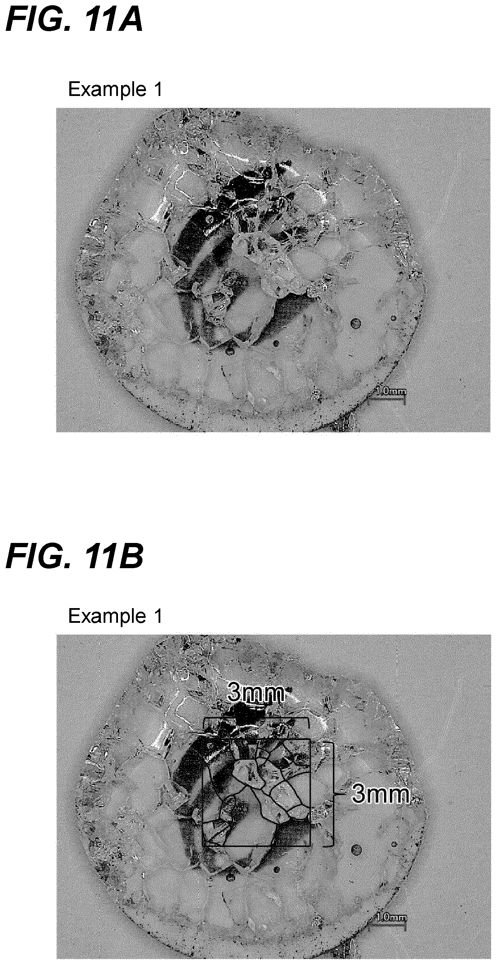

Fig. 11A is an optical microphotograph of the alumina sintered body sample prepared in Example 1. The entire alumina sintered body was made of a transparent alumina sintered portion. As shown in Fig. 11B, a square region of 3 mm on each side was defined at an arbitrary position on the alumina sintered portion, and grain boundaries were manually drawn in the region. The grain boundaries can be easily identified by visually recognizing an optical microphotograph (for example, magnification: 5 to 200 times) with naked eyes. The number (N) of single crystal-like structures in the square region was counted. Then, the number of the single crystal-like structures per unit area ($/mm^2$) was calculated by dividing the number (N) by the area of the square region ($9\ mm^2$).

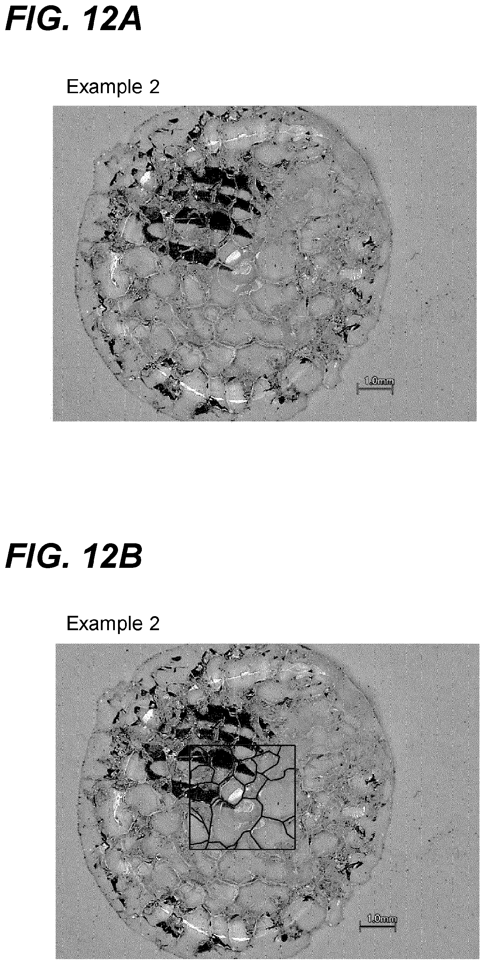

The alumina sintered body sample prepared in Example 2 was also subjected to the same measurement. Fig. 12A is an optical microphotograph of the alumina sintered body prepared in Example 2, and Fig. 12B is the optical microphotograph of Fig. 12A with drawing lines that indicate grain boundaries in a square region of 3 mm on each side. For the alumina sintered body sample of Example 2, the number (N) of single crystal-like structures in a square region was counted, and the number of single crystal-like structures per unit area ($/mm^2$) was calculated.

For Examples 1 and 2, the number (N) of single crystal-like structures and the number of single crystal-like structures per unit area ($/mm^2$) are shown in Table 5.

[Table 5]

|  | the Number of single crystal-like structures (N) | the Number of single crystal-like structures per unit area ($/mm^2$) |
|---|---|---|
| Example 1 | 25 | 2.8 |
| Example 2 | 24 | 2.7 |

Examples 1 and 2 and Comparative Example 1 will be discussed below.

In Examples 1 and 2, the alumina powder including the alumina particles 11 having the smaller particle diameter and the alumina particles 12 having the larger particle diameter was used. Thus, in the alumina sintered portion of the alumina sintered body obtained, the transmittance in the visible light region of 360 nm to 830 nm was 50% or more. This shows that a transparent alumina sintered portions were formed in Examples 1 and 2.

Especially in Example 1, since the particle diameter of the alumina powder 12 having the larger particle diameter contained in the alumina powder was as large as 18 μm, the transmittance in the visible light region was 70% or more and a particularly transparent alumina sintered portion was formed.

The alumina sintered portions of the alumina sintered bodies of Examples 1 and 2 had a small number of single crystal-like structures per unit area.

In Comparative Example 1, the alumina powder containing only the alumina particles 11 having the smaller particle diameter was used. Thus, the alumina sintered portion of the alumina sintered body obtained had extremely low transmittance in the visible light region and an opaque alumina sintered portion was formed.

This application claims the priority based on Japanese Patent Application No. 2019-058796 filed on March 26, 2019. Japanese Patent Application No. 2019-058796 is incorporated herein by reference.

DESCRIPTION OF REFERENCE SIGNS

| | |
|---|---|
| 10, 100: | Alumina powder |
| 11: | Alumina particle having a smaller particle diameter |
| 12: | Alumina particle having a larger particle diameter |
| 13: | Alumina composite particle |
| 20, 200: | Laminate body |
| 21: | Alumina article |
| 22: | Carbon powder-containing layer |
| 23: | Base material |
| 30: | Laser irradiation means |
| 31: | Laser light |
| 31E: | Irradiated position |
| 31R: | Region immediately below irradiated position |
| 40: | Alumina sintered body |
| 41: | Alumina sintered portion |
| 410: | Single crystal-like structure |
| 410b: | Grain boundary |
| 42: | Non-sintered portion |
| 60: | Mold |
| 61: | Pressurizing jig |

**Claims**

1. A method for producing an alumina sintered body, comprising:

   molding an alumina powder to obtain an alumina article, the alumina powder comprising alumina particles having a particle diameter of not less than 0.1 $\mu$m and less than 1 $\mu$m, and alumina particles having a particle diameter of not less than 1 $\mu$m and less than 100 $\mu$m;
   forming a carbon powder-containing layer on a surface of the alumina article to obtain a laminate body; and
   irradiating a surface of the carbon powder-containing layer of the laminate body with a laser light to form a transparent alumina sintered portion.

2. The sintering method according to claim 1, wherein the alumina article has a total pore volume of 0.20 mL/g or less, and a cumulative pore volume of pores having a pore diameter of 4 $\mu$m or more is less than 10% of the total pore volume.

3. The sintering method according to claim 1 or 2, wherein
   the alumina powder comprises:

   30 to 95 vol% of alumina particles having a particle diameter of not less than 1 $\mu$m and less than 100 $\mu$m; and
   5 to 70 vol% of alumina particles having a particle diameter of not less than 0.1 $\mu$m and less than 1 $\mu$m.

4. An alumina sintered body including a transparent alumina sintered portion, wherein the alumina sintered portion has a transmittance in a visible light region of 50% or more, and has the number of single crystal-like structures per unit area of the alumina sintered portion is 0.2 /mm$^2$ or more and less than 25 /mm$^2$.

# FIG. 1

# FIG. 2

# FIG. 3

## FIG. 4A

## FIG. 4B

## FIG. 4C

## FIG. 4D

## FIG. 5A

## FIG. 5B

## FIG. 5C

## FIG. 6A

## FIG. 6B

## FIG. 7

# FIG. 8

# FIG. 9

# FIG. 10

# FIG. 11A

Example 1

# FIG. 11B

Example 1

# FIG. 12A

Example 2

# FIG. 12B

Example 2

| | INTERNATIONAL SEARCH REPORT | International application No. |
|---|---|---|
| | | PCT/JP2020/013277 |

A.  CLASSIFICATION OF SUBJECT MATTER
C04B 35/115(2006.01)i
FI: C04B35/115

According to International Patent Classification (IPC) or to both national classification and IPC

B.  FIELDS SEARCHED

Minimum documentation searched (classification system followed by classification symbols)
C04B35/00-C04B35/84,B29C67/00,B33Y10/00,B33Y70/00

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)
JSTPlus/JMEDPlus/JST7580 (JDreamIII)

C.  DOCUMENTS CONSIDERED TO BE RELEVANT

| Category* | Citation of document, with indication, where appropriate, of the relevant passages | Relevant to claim No. |
|---|---|---|
| X | WO 2017/057551 A1 (NGK INSULATORS, LTD.) | 4 |
| A | 06.04.2017 (2017-04-06) claims, table 1 | 1-3 |
| Y | CN 108996998 A (UNIV GUANGDONG TECHNOLOGY) | 1, 4 |
| A | 14.12.2018 (2018-12-14) claims, paragraphs [0002]-[0004], example 5 | 2-3 |
| Y | WO 2017/135387 A1 (JAPAN FINE CERAMICS CENTER) | 1, 4 |
| A | 10.08.2017 (2017-08-10) claims, paragraph [0001], example 1-1 | 2-3 |

| ☐  Further documents are listed in the continuation of Box C. | ☒  See patent family annex. |
|---|---|

\*      Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| 04 June 2020 (04.06.2020) | 16 June 2020 (16.06.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/013277

| Patent Documents referred in the Report | Publication Date | Patent Family | Publication Date |
|---|---|---|---|
| WO 2017/057551 A1 | 06 Apr. 2017 | US 2018/0230020 A1 claims, table 1 CN 108025981 A | |
| CN 108996998 A | 14 Dec. 2018 | (Family: none) | |
| WO 2017/135387 A1 | 10 Aug. 2017 | US 2019-0054653 A1 claims, paragraph [0001], example 1-1 CN 108602726 A | |

Form PCT/ISA/210 (patent family annex) (January 2015)

**REFERENCES CITED IN THE DESCRIPTION**

**Patent documents cited in the description**

- WO 2017135387 A

- JP 2019058796 A